# EUROPEAN PATENT APPLICATION

(11) **EP 1 209 035 A2**
(43) Date of publication of application: **29.05.2002**
(21) Application number: 01203935.0
(22) Date of filing: 03.10.2001
(51) Int. Cl.: B60R 16/02

(54) **Control of wiring harness loop attached on moving parts**

(30) Priority: 28.11.2000 US 250393 P; 25.07.2001 US 915247
(71) Applicant: Siemens Automotive Corporation, Auburn Hills, Michigan 48326-2980 (US)
(72) Inventor: Chaillie, Frederic, Bloomfield Hills, Michigan 48301 (US)
(74) Representative: French, Clive Harry

(57) **Abstract**

The method of designing an area around a moving wire harness comprises the step of designing a wire harness to be connected between two surfaces, forming a wire loop with at least one of the two surfaces being movable. A dimension relating to the movement of the wire loop is determined, and space is allocated around the wire loop. Components adjacent the wire loop are then placed outside of the space.

## Description

### BACKGROUND OF THE INVENTION

This invention relates to a method for mounting wire harness in a vehicle. Wire harnesses are frequently used to bundle wire used to provide electric power and communication for various electrical systems within a vehicle. Frequently, these bundles of wire are attached to moving components of such systems. For example, a vehicle's power seating system may have bundles of wire attached to a movable seat. Due to confined space within the vehicle, however, these same bundles may interfere with other moving parts or rub against edges that lead to the early wear of the wire associated with these bundles. Additionally, vehicle interior designers may fail to accommodate for the presence of bundles of wire in their design, resulting in the presence of unsightly wires within the passenger compartment.

Typically, the foregoing problems are recognized only after the design and placement of the critical components of the vehicle's systems. As a consequence, manufacturers frequently retrofit their design of these components to prevent interference or hide the bundles of wires. Some manufacturers have attempted to resolve the foregoing problems by stuffing wires within protective fixtures such as caps and other wire covers. Alternatively, manufacturers may shield the bundles of wire from edges that may otherwise create wear, using plastic shields and covers. These fixtures require additional labor and expense to create and employ. Moreover, these fixtures are frequently oversized and may themselves lead to interference and a reduction of limited space within the vehicle. These retrofits further delay the design and construction of the vehicle.

A need therefore exists for a method of mounting a moving wire harness within a vehicle to accommodate the space required by the wire harness without the additional labor and expense entailed by the use of wire harness fixtures.

### SUMMARY OF THE INVENTION

The present invention comprises a method for allocating space required by a moving wire harness in a vehicle. Essentially, a dimension of the wire harness is measured and used to determine the area and volume required by the wire harness as it moves within the vehicle. Space is then allocated around the harness, permitting the vehicle interior designer to account for the physical dimensions of the wire harness and any space required for its integration into the vehicle.

A wire loop is defined for a wire harness. A dimension such as the length of the wire loop is determined. From this information, the area and volume covered by the movement of wire loop is calculated. Based on this information, space within the vehicle is allocated for the wire harness loop.

The wire loop is supported between two surfaces within the vehicle. One of the surfaces or both may be moveable. For example, one surface may be associated with a moveable power seat while the other surface may be associated with the frame supporting the power seat. The wire harness may communicate electric signals to and from the seat, such as switch signals. Accordingly, a dimension relating to the wire loop is determined to measure the area covered by the wire loop as the surface moves. Also, a volume associated with the traveling wire loop may be determined. In either instance, the allocated space associated with the wire loop is at least as great as the area or volume covered by the movement of the wire loop.

To control the location of the wire loop, support may be used to hold the wire loop within the expected area and volume covered by its movement. The support may involve the use of tape. Such tape may provide less constraining force on the wire loop so as to permit its expected movement without binding. By forming the wire harness in this way, potential areas of interference can easily be determined and modeled. Thus, without the use of fixtures, ties, or other wire harness retainers, the wire loop may avoid interfering with various components of the vehicle. Moreover, this technique permits manufacturers to avoid such interference without additional labor and expense associated with these fixtures.

Essentially, this space is determined prior to the design of placement of other components adjacent the area where the loop will move. Once the space is determined, the designer can then place components to be outside this space. Further, if the component is positioned close, tape can be used to ensure there is no contact while still maximizing the space available for the adjacent component.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.

Figure 1 shows an embodiment of the invention, including wire loop, first surface and second surface.

Figure 2 shows a side view of the embodiment of Figure 1, including first surface and second surface.

Figure 3 shows a plan view of the embodiments of Figure 1 and 2.

Figure 4 illustrates another embodiment of the invention, showing the use of tape to control the location of the wire loop.

Figure 5 shows an embodiment of the invention implemented in the design of a power seat.

Figure 6 shows another embodiment of the invention, employing candy stripe taping.

### DETAILED DESCRIPTION OF THE PREFERRED EMBODIMENTS

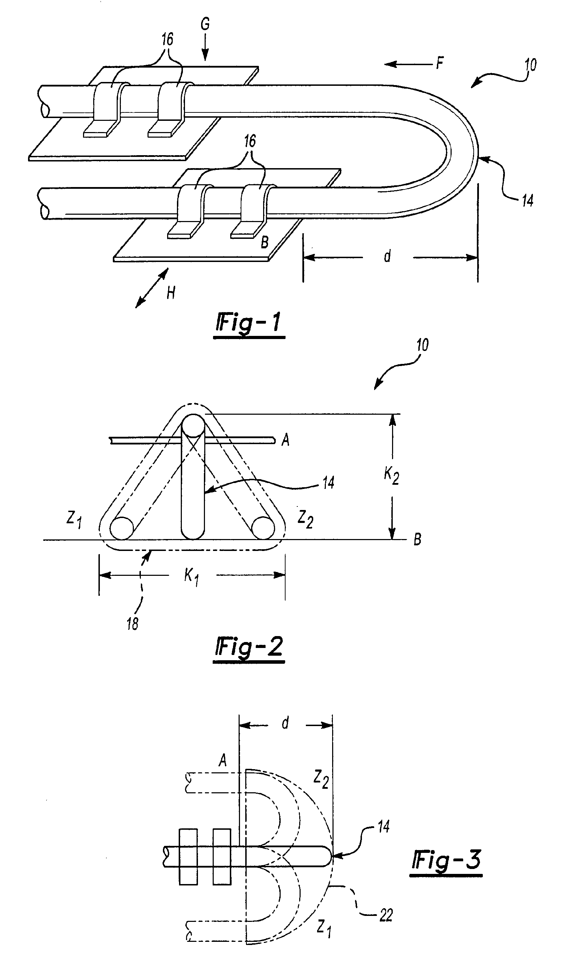

The invention may be understood by examining wire harness 10 in Figure 1. Wire harness 10 comprises wire loop 14 defined by being mounted with supports 16 on first surface A and second surface B. Dimension d comprises a length of wire loop 14 extending over surface B as shown in Figure 1. This portion of wire loop is preferably a dimension of wire loop 14 that may interfere with other components placed in proximity to wire harness 10. Dimension d is preferably measured from the furthest protruding surface, whether surface A or surface B, to demarcate the area or volume of interference.

Surface B may move along axis H. As surface B moves along this axis so too does wire loop 14. Wire loop 14 thus covers an area and volume along axis H. In such an instance, the area and volume covered by the movement of wire loop 14 may be determined and space allocated to avoid interference between wire loop 14 and nearby components.

Figure 2 illustrates wire harness 10 as viewed along arrow F of Figure 1, showing a side view of wire harness 10 including first surface A and second surface B. Because second surface B is movable, wire loop 14 may move from position Z1 to position Z2. Z1 and Z2 are the positions of maximum extension of wire loop 14 with second surface B. As seen, an area 18 can then be defined as the space to be allocated for wire loop 14 in a vehicle. Area 18 may be determined by measuring distance K1 and distance K2, dimensions associated with wire loop 14 and its movement. Preferably, allocated space 18 should be equal to or greater than the area covered by the movement of wire loop 14. Also, it is desirable that the surfaces A and B to which the wire harness is mounted are maintained parallel. The wire can be taped to be parallel.

As shown in Figure 3, dimension d may be used to determine volume 22, the volume covered by the movement of wire loop 14 from positions Z1 and Z2. Again, space may be allocated based on volume 22 so as to permit the movement of wire loop 14 in a vehicle without interference from other components.

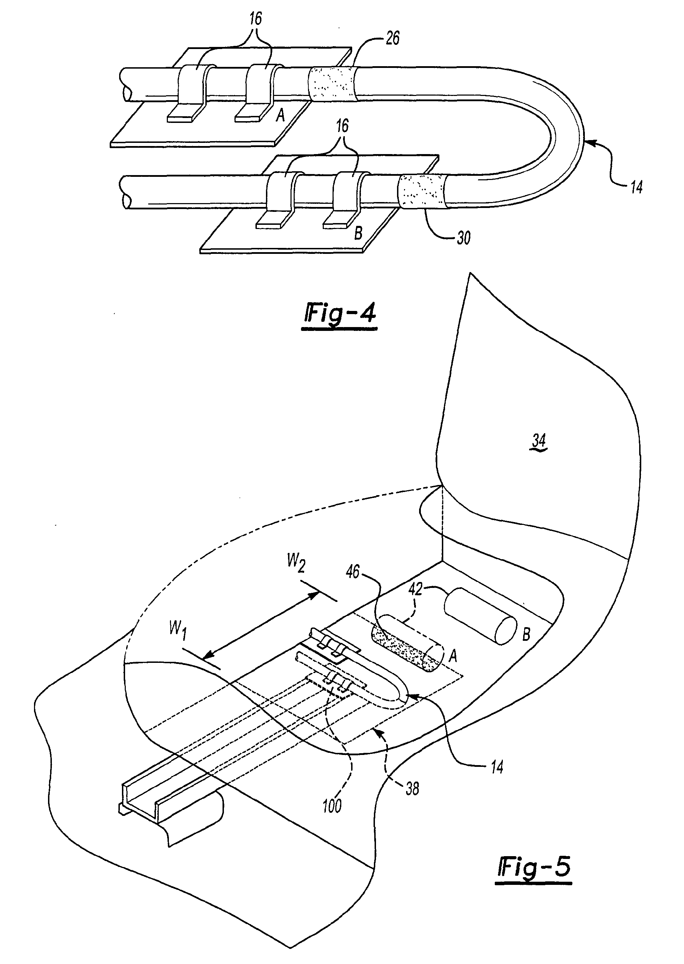

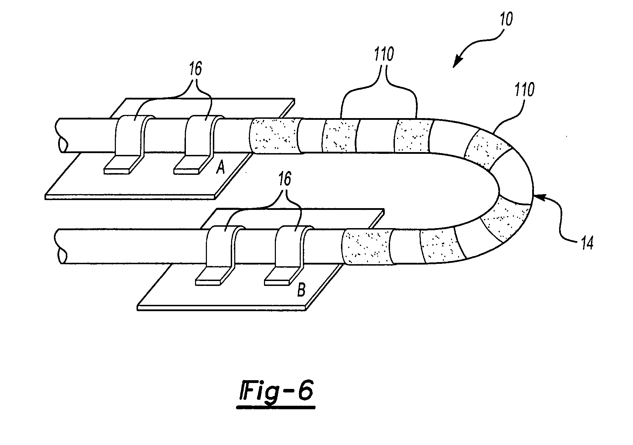

Figure 4 illustrates another embodiment of the invention. First surface A and second surface B are shown with wire loop 14 and supports 16. Also shown, are supports 26 and 30. In Figure 6, candy striped taping 110 provides flexible support to wire loop 14 resulting in the predictable movement of wire loop 14. While the illustrated candy striping is spaced along the loop, more support could be provided by providing the striping as an overlapped wrap. Such taping assists in constraining wire loop 14 to move within the allocated space established for its movement.

Following ascertainment of the dimensions occupied by wire loop 14, areas and volumes of interference may be determined and space allocated based on measured dimensions of wire loop 14. These areas and volumes of interference may be used in three dimensional computer modeling of the vehicle compartment. Indeed, measuring dimensions of wire loop 14 such as dimension d permit a computer to generate the area and volume covered by the movement of wire loop 14. A computer model may then allocate a predetermined amount of space around the area and volume of moving wire loop 14 to avoid interference with other vehicle components that would otherwise find themselves in the moving path of wire loop 14. The entire compartment may then be planned to accommodate for the movement of wire bundles. Based on this model, the designer may then place components around wire loop 14 to avoid interference rather than retroactively design fixtures to address interference. In this way, space may be planned to accommodate wire loop 14 and its movement in a vehicle.

Figure 5 illustrates the invention in the environment of power seat 34. As known, the wire harness may connect components, such as switches on the seat to fixed components such as controls for the motors which drive the seat. A wire harness has a wire loop 14 defined since one end of the wire harness is operatively connected to power seat 34 and the other end is connected to a frame at 100. Thus, the loop 14 may move between W₁ and W₂. Movement of wire loop 14 covers area 38. Area 38 may be determined by measuring a dimension relating to wire loop 14 at the distance between W₁ and W₂ generally as discussed above. These dimensions may be entered into a three dimensional computer model of power seat 34. Accordingly, for the space planning of the interior compartment, a computer model would allocate space automatically around area 38 to avoid interference with the movement of wire loop 14. Thus, rather than locate motor 42 at A, which would interfere with wire loop 14 at area 46, the computer model would place motor 42 outside area 38, at say B, to avoid interference. In the past, such interference may not have been identified until placement of the components after design. This then required the use of protective fixtures such as mentioned above. One of ordinary skill could develop the model to automatically allocate space around area 38. In this way, space may be allocated electronically to avoid interference with power seat 34. More generally, this technique may be employed in other vehicle environments, such as the engine compartment, to ensure wire loop clearance.

The aforementioned description is exemplary rather than limiting. Many modifications and variations of the present invention are possible in light of the above teachings. The preferred embodiments of this invention have been disclosed. However, one of ordinary skill in the art would recognize that certain modifications would come within the scope of this invention. Hence, within the scope of the appended claims, the invention may be practiced otherwise than as specifically described. For this reason the following claims should be studied to determined the true scope and content of this invention.

## Claims

1. A method of designing an area around a moving wire harness comprising the steps of:
designing a wire harness to be connected between two surfaces, forming a wire loop with at least one of the two surfaces being movable;
determining a dimension relating to the movement of the wire loop during movement of at least one of the two surfaces;
allocating space around the wire loop in a vehicle based on the determination; and
then designing the placement of components adjacent the wire loop, but outside the space.

2. The method of Claim 1 wherein the dimension relates to the area covered by the movement of the wire loop.

3. The method of Claim 2 wherein the allocated space is at least as great as the area covered by the movement of the wire loop.

4. The method of Claim 1 wherein the dimension relates to the volume covered by the movement of the wire loop.

5. The method of Claim 4 wherein the allocated space is at least as great as the volume covered by the movement of the wire loop.

6. The method of Claim 1 including the step of supporting the wire loop to control the dimension relating to the wire loop.

7. The method of Claim 6 wherein supporting comprises taping wrapped around said wire loop.

8. The method of Claim 7 wherein said wrapping is in a candy stripe pattern.

9. The method of Claim 1 wherein at least one of the two surfaces is operatively connected to a seat.

10. The method of Claim 1 wherein allocating space is performed electronically.
